# EUROPÄISCHE PATENTSCHRIFT

(11) **EP 3 054 216 B1**
(45) Veröffentlichungstag und Bekanntmachung des Hinweises auf die Patenterteilung: **02.01.2019**
(21) Anmeldenummer: 16153543.0
(22) Anmeldetag: 31.01.2016
(51) Int. Cl.: F23N 3/00, B60H 1/22

(54) **STEUERUNGSVERFAHREN FÜR DEN EINSCHALTFUNKTIONSABLAUF EINES MIT BRENNSTOFF ARBEITENDEN HEIZGERÄTES**
CONTROL METHOD FOR THE STARTUP FUNCTION OF A HEATING DEVICE WHICH USES FUEL
PROCEDE DE COMMANDE POUR LE PROCESSUS D'ALLUMAGE D'UN APPAREIL DE CHAUFFAGE A COMBUSTIBLE

(30) Priorität: 09.02.2015 DE 102015101822
(43) Veröffentlichungstag der Anmeldung: 10.08.2016
(73) Patentinhaber: Valeo Thermal Commercial Vehicles Germany GmbH, 82205 Gilching (DE)
(72) Erfinder: Soppa, Nico, 17033 Neubrandenburg (DE)
(74) Vertreter: Strasser, Wolfgang

(56) Entgegenhaltungen:
- EP-A1- 2 116 771
- EP-A2- 0 384 280
- DE-A1- 4 142 841
- DE-A1- 19 548 234
- DE-U1-202015 100 640

## Beschreibung

Die Erfindung betrifft ein Steuerungsverfahren für den Einschaltfunktionsablauf eines mit Brennstoff arbeitenden Heizgerätes.

In derartigen Heizgeräten, wie sie insbesondere auch in Kraftfahrzeugen zum Vorwärmen des Motors (insbesondere bei Dieselfahrzeugen) und/oder zum Heizen des Fahrgastraumes zum Einsatz kommen, werden zur Wärmegewinnung flüssige oder gasförmige Brennstoffe mit Luft vermischt und in einem Brennerraum verbrannt.

Wird ein solches Heizgerät ausgehend von einem kalten Zustand oder von einem Zustand in Betrieb genommen (d.h. eingeschaltet), bei dem die Temperatur seiner Teile niedriger als die bei längerem Betrieb erreichte Temperatur ist, so durchläuft das Heizgerät unter der Regie der ihm zugeordneten Steuereinheit üblicherweise die folgenden Funktionsphasen:
In einer Vorlaufphase, die in vielen Ländern vom Gesetzgeber vorgeschrieben ist und die bis zu etwa 15 Sekunden dauern kann, wird lediglich ein zum Heizgerät gehörendes Gebläse eingeschaltet, das dem Brennerraum Außen- bzw. Frischluft zuführt, während eine Brennstoffzufuhr nicht erfolgt. Dies dient zum Spülen des Brennerraums und der Abgasleitungen, um eventuell noch vorhandene Abgasreste zu entfernen. Außerdem kann bei Heizgeräten, die mit flüssigem Brennstoff betrieben werden, in diesem Zeitraum der für den nachfolgenden Betrieb erforderliche Brennstoffdruck aufgebaut werden.

Ist die Zeitspanne der Vorlaufphase abgelaufen, wird die Brennstoffzufuhr zum Brennerraum, z.B. durch Öffnen eines Brennstoff-Magnetventils aktiviert. Liegt der Brennstoff in flüssiger Form vor, wird er zerstäubt und mit der vom Gebläse weiterhin geförderten Luft vermischt. Bei gasförmigem Brennstoff erfolgt diese Vermischung ohne die Verwendung spezieller Zerstäubermittel.

Durch einen oder mehrere rasch hintereinander erzeugte Zündfunken wird das dem Brennerraum zugeführte Brennstoff-Luftgemisch gezündet, sodass der eigentliche Verbrennungsvorgang beginnt.

Diesem Start der Verbrennung folgt eine sogenannte Übergangsphase, zu deren Beginn die an der Gemischbildung, der Verbrennung und der Wärmeübertragung beteiligten Komponenten des Heizgerätes noch relativ kühl sind, sich aber im weiteren Zeitverlauf nach und nach an die vorgesehenen, jeweiligen Dauerbetriebstemperaturen annähern.

Erst wenn der auch als Beharrungszustand bezeichnete Dauerbetriebszustand erreicht ist, haben sich die Temperaturen der betreffenden Heizgerätekomponenten sowie die Abgaszusammensetzung und die Abgastemperatur auf die End-Werte eingeschwungen, die durch den für das betreffende Heizgerät vorgesehenen Lambda-Wert (Verhältnis von zugeführter Luftmasse zu zugeführter Brennstoffmenge) gegeben sind. In diesem Zustand sind die Abgasemissionen relativ gering.

Bei Heizgeräten, deren Funktionsablauf dem eben beschriebenen Stand der Technik folgt, wird während des gesamten zwischen Einschalten und Erreichen des Beharrungszustandes liegenden Zeitraums, das heißt also sowohl während der Vorlauf- als auch während der Übergangsphase die in den Brennerraum eingetragene Luftmasse (abgesehen von nicht beabsichtigten Drehzahlschwankungen des Luftfördergebläses) auf einem Wert konstant gehalten, der gleich dem Dauerbetriebs-Wert m_{Lnormal} der für den Beharrungszustand zur Erzielung des gewünschten Lambda-Wertes erforderlichen Dauerbetriebs-Luftmasse ist.

Aus der DE 195 48234 A1 ist ein Steuerungsverfahren für den Funktionsablauf eines mit Brennstoff arbeitenden Heizgerätes der im Oberbegriff von Anspruch 1 genannten Art bekannt, bei dem auf eine zum Spülen dienende Vorlaufphase eine Übergangsphase folgt, während derer dem Brennraum eine von einem niedrigen Spülphasen-Anfangswert bis zum Dauerbetriebs-Wert m_{Lnormal} stetig ansteigende Luftmasse und eine zunehmende Brennstoffmenge zugeführt werden. Eine zuvor eingeschaltete Glühkerze, die das derart zugeführte Brennstoff-Luftgemisch zünden soll, wird kurze Zeit nach dem Einsetzen der Brennstoff-Förderung abgeschaltet. Bei dieser Vorgehensweise besteht die Gefahr, dass es insbesondere während der Übergangsphase zu einer erhöhten Abgasemission kommt.

Der Erfindung liegt demgegenüber die Aufgabe zugrunde, ein Verfahren der eingangs genannten Art so weiterzubilden, dass die Abgasemission insbesondere in der Übergangsphase deutlich vermindert wird.

Zur Lösung dieser Aufgabe sieht die Erfindung ein Steuerungsverfahren mit den im Anspruch 1 niedergelegten Merkmalen vor.

Dieser Lösung liegt die Erkenntnis zugrunde, dass beim Stand der Technik die Abgasemissionen in der Übergangsphase, deren Dauer vom jeweiligen Heizgerät und dessen Umgebungsbedingungen abhängt, zumeist deutlich erhöht sind. Die Ursache hierfür dürfte darin liegen, dass während des gesamten Brennvorganges ein fortwährender Eintrag einer Luftmasse erfolgt, deren Wert gleich dem Dauerbetriebs-Wert m_{Lnormal} ist. Diese vergleichsweise große Luftmasse kühlt in der Übergangsphase zum einen die an der Verbrennung und Wärmeübertragung beteiligten Komponenten des Heizgerätes ab; andererseits muss sie vom System erwärmt werden, um eine gute Zerstäubung und Verdampfung des Brennstoffes zu bewirken und somit die Gemischbildung zu unterstützen. Zu Beginn der Verbrennung, also in der Übergangsphase, sind die an der Gemischbildung, Verbrennung und Wärmeübertragung beteiligten Komponenten des Heizgerätes noch relativ kühl, ihre Temperaturwerte liegen zumeist wesentlich unter denen, die im Beharrungszustand erreicht werden. Somit ist auch die Temperatur im Bereich der gemischbildenden Komponenten relativ gering und hat sich noch nicht eingeschwungen. Dieser Zustand wird durch die große Luftmasse, die gemäß dem Stand der Technik insbesondere in der Übergangsphase eingetragen wird, in die Länge gezogen. Die Folge all dieser Faktoren sind erhöhte Emissionswerte. Der Eintrag der Luft für die Verbrennung wirkt sich gerade in der Übergangsphase am stärksten aus, und die Emissionen einiger Abgasbestandteile in der Übergangsphase sind deutlich höher als im Beharrungszustand.

Gemäß der Erfindung wird die dem Brennraum zugeführte Luftmasse einem festgelegten Zeitablauf folgend variiert, der mit dem Einschalten des Heizgerätes beginnt und gegebenenfalls aufgrund von Systemmesswerten, die von entsprechenden Sensoren an eine Steuereinheit geliefert werden, abgeändert werden kann. Somit wird die dem Brennraum zugeführte Luftmasse auf unterschiedliche Werte gesteuert, die der vom Heizgerät jeweils momentan durchlaufenen Phase optimal angepasst sind.

Dadurch, dass dem Brennraum während eines festlegbaren Zeitraums innerhalb der Übergangsphase zwar die gleiche Brennstoffmenge, wie sie auch für den Dauerbetrieb des Beharrungszustandes vorgesehen ist, gleichzeitig aber eine Luftmasse mit einem verringerten Wert m_{LÜbergang} zugeführt wird, ist das Luft/Brennstoff-Verhältnis Lambda während dieses definierten Zeitraums, der bis zu 20 Sekunden dauern kann, gegenüber dem Luft/Brennstoff-Verhältnis Lambda des späteren Beharrungszustandes verringert.

Dabei liegt dieser definierte Zeitraum zumindest teilweise innerhalb der Übergangsphase, d.h. er kann auch bereits kurz vor ihr beginnen, und er kann ebenso lang wie die Übergangsphase oder kürzer als diese sein. Das verringerte Luft/Brennstoff-Verhältnis Lambda wird dabei nicht durch eine Erhöhung der Brennstoffmasse erzielt, sondern durch die Zuführung einer Luftmasse mit einem Wert m_{LÜbergang}, der gegenüber dem für den Beharrungszustand geräteabhängig festgelegten Dauerbetriebs-Wert m_{Lnormal} um einen vorgebbaren Prozentsatz verringert ist. Nach Ablauf der definierten Zeit wird der Wert der dem Brennraum zugeführten Luftmasse auf den Dauerbetriebs-Wert m_{Lnormal} angehoben.

Durch die verminderte Luftzufuhr während des zumindest teilweise in der Übergangsphase der Verbrennung liegenden definierten Zeitraumes erfolgt eine schnellere Erwärmung der an der Gemischbildung, Verbrennung und Wärmeübertragung beteiligten Komponenten des Heizgerätes sowie der zugeführten Verbrennungsluft, wodurch die Gemischbildung begünstigt wird. Dadurch werden während der Übergangsphase die Emissionen bestimmter Abgas-Bestandteile sowohl in ihrer Menge (z.B. ppm) als auch in ihren Masseströmen (z.B. g/h) als auch leistungsbezogen (z.B. g/kWh) gegenüber dem bisher üblichen Verfahren deutlich abgesenkt. Die Senkung der Abgas-Emissionen erfolgt sowohl in ihrer Höhe (Peak) als auch in ihrer Zeitdauer.

Von besonderer Bedeutung ist, dass durch die erfindungsgemäßen Maßnahmen die Dauer der Übergangsphase verkürzt und somit der Beharrungszustand schneller erreicht wird.

Nach einer geräteabhängigen Zeit wird der Wert der Luftmasse auf den ansonsten bei dem jeweiligen Gerät üblichen Dauerbetriebs-Wert m_{Lnormal} angehoben, wodurch eine eventuelle Verschlechterung der Abgasemissionen in der Folge, d.h. während des Beharrungszustandes vermieden wird.

Besondere Vorteile der Erfindung sind darin zu sehen, dass keine Erhöhung der Brennstoffmasse nötig ist, sodass es weder zu einem Mehrverbrauch an Brennstoff noch zu einer Erhöhung bestimmter entstehender Abgasemissionen durch eine dauerhafte Absenkung der Luftmasse kommt, und dass keine Verdünnung der Abgasemissionen z.B. durch Anheben der Verbrennungs-Luftmasse oder nachträgliches Einbringen von Luft in den Abgasstrom erfolgt.

Vorzugsweise liegt der Wert m_{LÜbergang} der während der Übergangsphase zugeführten Luftmasse in einem Bereich von 85 % bis 99 % des Dauerbetriebs-Wertes m_{Lnormal} und, in besonders bevorzugter Weise, in einem Bereich von 90 % bis 95 % des Dauerbetriebs-Wertes m_{Lnormal}. Bei den konkreten Heizgeräten, an denen die der Erfindung zugrunde liegenden Untersuchungen durchgeführt wurden, hat sich ein auf 91% des Dauerbetriebs-Wertes m_{Lnormal} verminderter Wert m_{LÜbergang} als optimal für die Verringerung der in der Übergangsphase entstehenden Abgasemissionen erwiesen. Andere in den angegebenen Bereich liegende Prozentsätze bewirken ebenfalls eine Verringerung der Abgasemissionen, die aber je nach Heizgerätetyp geringer ausfallen kann.

Gemäß einer vorteilhaften Variante ist vorgesehen, dass dem Brennerraum eine Luftmasse mit dem verminderten Wert m_{LÜbergang} bereits 1 bis 2 Sekunden vor der Zündung des in den Brennerraum strömenden Brennstoff-Luftgemisches zugeführt wird.

Bei einer weiteren vorteilhaften Variante des erfindungsgemäßen Verfahrens ist vorgesehen, dass dem Brennerraum zumindest während eines Teils der Vorlaufphase eine Luftmasse mit einem verminderten Wert m_{LVorlauf} zugeführt wird, wobei sich diese verminderte Zufuhr auch über die gesamte Dauer der Vorlaufphase erstrecken kann.

Durch den Vorlauf des Gebläses vor dem eigentlichen Brennbeginn werden das Heizgerät und insbesondere seine an der Gemischbildung, Verbrennung und Wärmeübertragung beteiligten Komponenten umso stärker ausgekühlt bzw. wird ihnen in vorherigen Heizzyklen erzeugte Wärme umso stärker entzogen, je höher die dem Brennerraum zugeführte Luftmasse ist, was eine entsprechende Reduzierung des Gesamt-Wirkungsgrades bedeutet.

Dadurch, dass dem Brennerraum gemäß einer Variante der Erfindung zumindest während eines Teils der Vorlaufphase eine Luftmasse mit einem gegenüber dem Dauerbetriebs-Wert m_{Lnorma} verringerten Wert m_{LVorlauf} zugeführt wird, der gleich dem verringerten Wert m_{LÜbergang} der in der Übergangsphase zugeführten Luftmasse oder kleiner oder größer als dieser verringerte Wert m_{LÜbergang} sein kann, werden die in der Zeit des Gebläsevorlaufs auftretenden Wärmeverluste verringert und der Gesamtwirkungsgrad des Heizgerätes erhöht.

Die erfindungsgemäßen Änderungen der dem Brennerraum zugeführten Luftmassen können vorzugsweise durch eine entsprechende Verminderung bzw. Erhöhung der jeweiligen Gebläse-Drehzahl des Heizgerätes und/oder mit Hilfe einer vor oder nach dem Heizgerät befindlichen Einrichtung zur Veränderung der Luft- oder Abgasmasse, wie z. B. Luftsteuerklappen erreicht werden.

Die Luftmassen und/oder Drehzahlen des Heizgerätegebläses und/oder die Luftsteuerklappensstellungen sowie die jeweilige Dauer der verschiedenen Phasen können in einem Funktionsablaufprogramm in einer Steuereinheit des Heizgerätes oder der angrenzenden Peripherie hinterlegt sein.

Diese und weitere vorteilhafte Ausgestaltungen des erfindungsgemäßen Verfahrens sind in den Unteransprüchen niedergelegt.

Die Erfindung wird im Folgenden anhand von Ausführungsbeispielen unter Bezugnahme auf die Zeichnung erläutert; in dieser zeigen:
- Fig. 1: ein Diagramm, in dem über der Zeit t der Verlauf der dem Brennerraum zugeführten Luftmasse m_{L} für eine erste Variante des erfindungsgemäßen Verfahrens dargestellt ist, bei der während der Vorlaufphase und der Übergangsphase in etwa die gleiche Luftmasse zugeführt wird,
- Fig. 2: ein dem Diagramm der Fig. 1 entsprechendes Diagramm für eine zweite Variante des erfindungsgemäßen Verfahrens, bei welcher der Wert der während der Vorlaufphase zugeführten Luftmasse in etwa dem Dauerbetriebs-Luftmassenwert entspricht,
- Fig. 3: ein dem Diagramm der Fig. 2 entsprechendes Diagramm für eine dritte Variante des erfindungsgemäßen Verfahrens, bei welcher die Absenkung des Vorlaufphasen-Luftmassewertes auf den Übergangsphasen-Luftmassenwert erst einige Zeit nach dem Verbrennungsstart erfolgt,
- Fig. 4: ein dem Diagramm der Fig. 1 entsprechendes Diagramm für eine vierte Variante des erfindungsgemäßen Verfahrens, bei welcher der Wert der während der Vorlaufphase zugeführten Luftmasse deutlich höher als der Dauerbetriebs-Luftmassenwert ist, und
- Fig. 5: ein dem Diagramm der Fig. 4 entsprechendes Diagramm für eine fünfte Variante des erfindungsgemäßen Verfahrens, bei welcher die Absenkung des Vorlaufphasen-Luftmassewertes auf den Übergangsphasen-Luftmassenwert erst einige Zeit nach dem Verbrennungsstart erfolgt.

In allen Figuren fällt der Beginn der Vorlaufphase VPh mit dem Nullpunkt der Zeitachse zusammen. Der eingeschwungene Beharrungszustand BBZ ist jeweils ganz rechts wiedergegeben. Der schnelle Anstieg der jeweiligen Luftmasse zu Beginn einer jeden Vorlaufphase VPh ist darauf zurückzuführen, dass das die Luft fördernde Gebläse zum Zeitpunkt Null eingeschaltet wird und aus dem Stillstand heraus auf die vorgegebene Solldrehzahl hochfahren muss, die dann die Förderung der jeweils gewünschten Luftmasse bewirkt.

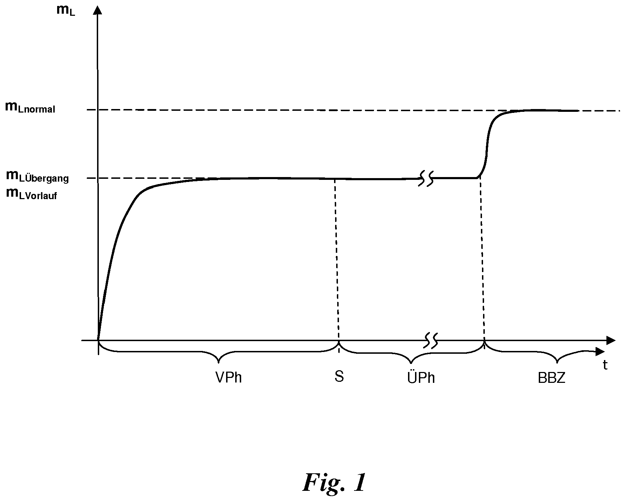

Bei dem in Fig. 1 gezeigten Beispiel steigt in der Vorlaufphase VPh die dem Brennerraum zugeführte Luftmasse rasch auf einen Wert m_{LVorlauf} an, der gegenüber dem Dauerbetriebs-Wert m_{Lnormal} der dem Brennerraum im Beharrungszustand BBZ zugeführten Luftmasse deutlich verringert ist. Dabei liegt der Wert m_{LVorlauf} der dem Brennerraum während der Vorlaufphase VPh zugeführten Luftmasse vorzugsweise in einem Beriech von 85% bis 99% des Dauerbetriebs-Wertes m_{Lnormal} und in besonders bevorzugter Weise in einem Bereich von 90% bis 95% des Dauerbetriebs-Wertes, was dem Diagramm jedoch nicht maßstäblich entnommen werden kann.

Diese bevorzugten bzw. besonders bevorzugten Bereiche gelten auch für die im Folgenden beschriebenen Ausführungsbeispiele.

Mit dem Start S der Verbrennung beginnt eine Übergangsphase ÜPh, während derer ein Luftmassenwert m_{LÜbergang}, der hier gleich dem Wert m_{LVorlauf} der während der Vorlaufphase zugeführten Luftmasse ist, für einen vorgebbaren Zeitraum beibehalten wird, um dann schnell auf den Wert m_{Lnormal} anzusteigen, der während des folgenden Beharrungszustandes BBZ nicht mehr geändert wird.

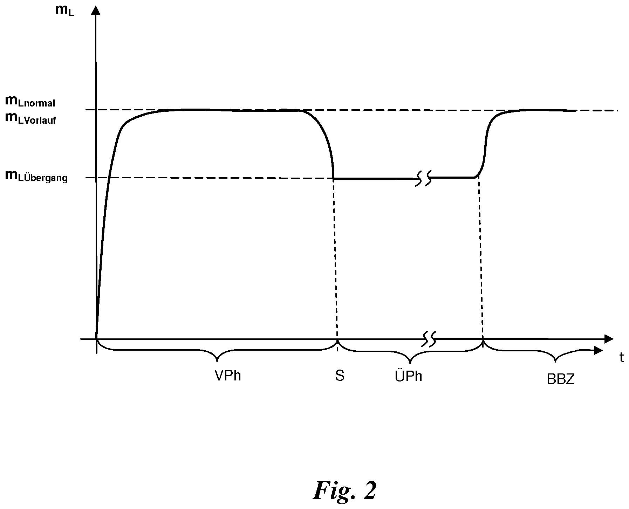

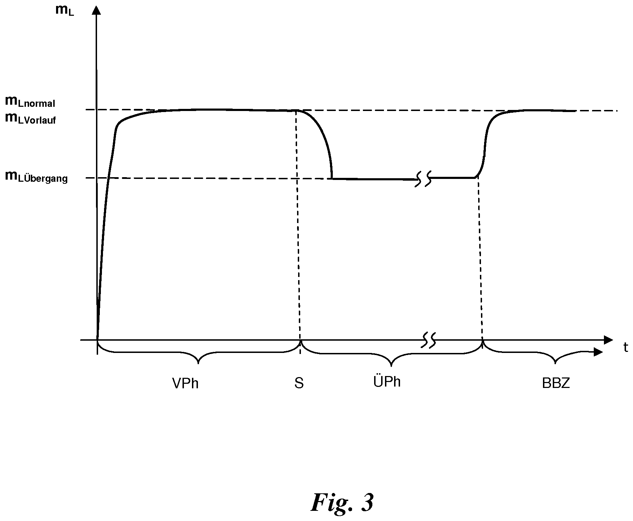

Bei dem in Fig. 2 dargestellten Beispiel steigt in der Vorlaufphase VPh der Wert m_{LVorlauf} der dem Brennerraum zugeführten Luftmasse rasch auf den Dauerbetriebs-Wert m_{Lnormal} an. Beim Start S der Verbrennung wird der Wert der dem Brennraum zugeführten Luftmasse rasch auf m_{LÜbergang} abgesenkt, der während der sich anschließenden, eine vorgebbare zeitliche Länge besitzenden Übergangsphase ÜPh beibehalten wird, um danach schnell auf den Dauerbetriebs-Wert m_{Lnormal} anzusteigen, der sich während des folgenden Beharrungszustandes BBZ nicht mehr wesentlich ändert. Die eben erwähnte Absenkung kann alternativ auch kurz vor dem Start S der Verbrennung oder nach diesem erfolgen; letzteres ist in Fig. 3 wiedergegeben.

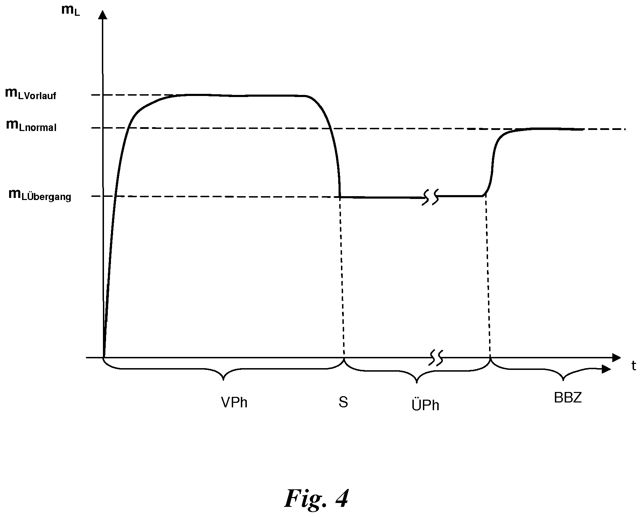

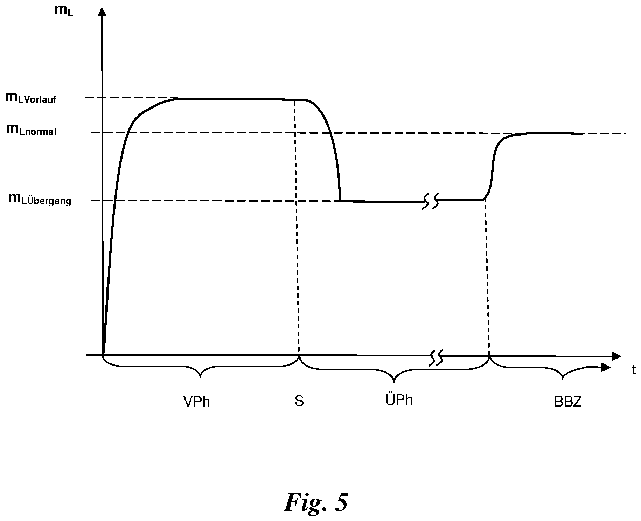

Bei dem in Fig. 4 gezeigten Beispiel unterscheidet sich der Verlauf des Wertes der dem Brennerraum zugeführten Luftmasse von dem Verlauf der Fig. 1 dadurch, dass in der Vorlaufphase VPh der Wert m_{LVorlauf} der dem Brennerraum zugeführten Luftmasse rasch auf einen Wert ansteigt, der größer ist als der Dauerbetriebs-Wert m_{Lnormal} der dem Brennerraum im Beharrungszustand BBZ zugeführten Luftmasse. Beim Start S der Verbrennung wird der Wert der dem Brennerraum zugeführten Luftmasse rasch auf den Wert m_{LÜbergang} abgesenkt, der für die sich anschließende, eine vorgebbare zeitliche Länge besitzende Übergangsphase ÜPh beibehalten wird, um danach schnell auf den Dauerbetriebs-Wert m_{Lnormal} anzusteigen, der sich während des folgenden Beharrungszustandes nicht mehr wesentlich ändert. Die eben erwähnte Absenkung kann alternativ auch kurz vor dem Start S der Verbrennung oder nach diesem erfolgen; letzteres ist in Figur 5 wiedergegeben.

Die Verfahrensvarianten der Fig. 4 und Fig. 5 können dann von Vorteil sein, wenn ein Heizgerät nach längerer Betriebsdauer abgeschaltet und dann nach einer kurzen Pause wieder eingeschaltet wird, weil in diesem Fall unter Umständen eine größere Menge von im Heizgerät verbliebenen Abgasresten ausgespült werden muss, und die an der Gemischbildung, der Verbrennung und der Wärmeübertragung beteiligten Komponenten des Heizgerätes eine vergleichsweise hohe Temperatur besitzen, so dass sie durch die vergrößerte Luftmasse während des Vorlaufs nicht übermäßig abgekühlt werden.

Vorteilhafterweise kann die Steuereinheit eines erfindungsgemäßen Heizgerätes so eingerichtet sein, dass sie mehrere oder alle der gezeigten Funktionsablauf-Varianten realisieren kann, wobei sie in Abhängigkeit von beim Einschalten jeweils herrschenden Geräte- und/oder Umweltparametern die jeweils günstigste Variante auswählt. Die der Auswahl zugrunde zu legenden Geräte- und/oder Umweltparameter können durch Sensoren gemessen werden, deren Messwerte der Steuereinheit des Heizgerätes zugeführt und von dieser ausgewertet werden.

## Patentansprüche

1. Steuerungsverfahren für den Einschaltfunktionsablauf eines mit Brennstoff arbeitenden Heizgerätes, wobei dieser Einschaltfunktionsablauf folgende Zeitabschnitte umfasst:
- eine mit dem Einschalten des Heizgerätes beginnende Vorlaufphase (VPh), während derer dem Brennerraum zur Spülung nur Außenluft, die durch ein Gebläse gefördert wird, aber kein Brennstoff zugeführt wird und die nach einer vorgebbaren Zeitspanne beendet wird,
- einen Start (S) der Verbrennung, der durch eine Aktivierung der Brennstoffzufuhr und Zündung des daraufhin in den Brennerraum strömenden Brennstoff-Luftgemisches erfolgt,
- einen eingeschwungenen Beharrungs-Betriebszustand (BBZ), während dessen dem Brennerraum eine Luftmasse mit einem für das Erzielen des angestrebten Lambda-Wertes erforderlichen Wert m_{Lnormal} und eine entsprechende Brennstoffmenge zugeführt werden,
- eine sich an die Vorlaufphase (VPh) anschließende, dem Beharrungs-Betriebszustand (BBZ) vorausgehende Übergangsphase (ÜPh), die eine vorgebbare zeitliche Länge besitzt, und während derer dem Brennerraum eine verringerte Luftmasse zugeführt wird, deren Wert m_{LÜbergang} kleiner als der Wert m_{Lnormal} der dem Brennraum während des Beharrungs-Betriebszustandes (BBZ) zugeführten Luftmasse ist,
**dadurch gekennzeichnet,**
- **dass** die Vorlaufphase (VPh) durch den Start (S) der Verbrennung beendet wird,
- **dass** sich die Übergangsphase (ÜPh) unmittelbar an den Start (S) der Verbrennung anschließt,
- **dass** der Wert m_{LÜbergang} der dem Brennraum während eines zumindest teilweise in der Übergangsphase (ÜPh) liegenden definierten Zeitraums zugeführten, verringerten Luftmasse beibehalten wird, und
- **dass** der Wert m_{LÜbergang} dieser verringerten Luftmasse danach schnell auf den Dauerbetriebs-Wert m_{Lnormal} ansteigt.

2. Steuerungsverfahren nach Anspruch 1, **dadurch gekennzeichnet, dass** der Wert m_{LÜbergang} der dem Brennerraum zumindest während eines Teils der Übergangsphase (ÜPh) zugeführten, verringerten Luftmasse in einem Bereich von ca. 85 % bis ca. 99 % des Wertes m_{Lnormal} der dem Brennerraum während des eingeschwungenen Beharrungs-Betriebszustandes (BBZ) zugeführten Luftmasse liegt.

3. Steuerungsverfahren nach Anspruch 2, **dadurch gekennzeichnet, dass** der Wert m_{LÜbergang} der dem Brennerraum zumindest während eines Teils der Übergangsphase (ÜPh) zugeführten, verringerten Luftmasse in einem Bereich von ca. 80 % bis ca. 95 % des Wertes m_{Lnormal} der dem Brennerraum während des eingeschwungenen Beharrungs-Betriebszustandes (BBZ) zugeführten Luftmasse liegt.

4. Steuerungsverfahren nach Anspruch 2 oder 3, **dadurch gekennzeichnet, dass** die Zufuhr der verringerten Luftmasse zum Brennerraum bereits ein bis zwei Sekunden vor dem Start (S) der Verbrennung beginnt.

5. Steuerungsverfahren nach einem der vorhergehenden Ansprüche, **dadurch gekennzeichnet dass** der Zeitpunkt, in dem der Wert der dem Brennerraum zugeführten Luftmasse von m_{LÜbergang} auf m_{Lnormal} erhöht wird, vor dem Erreichen des Beharrungs-Betriebszustandes (BBZ) liegt.

6. Steuerungsverfahren nach einem der vorhergehenden Ansprüche, **dadurch gekennzeichnet, dass** der Zeitraum, während dessen die Zufuhr der verringerten Luftmasse m_{LÜbergang} zum Brennerraum erfolgt, 20 Sekunden nicht übersteigt.

7. Steuerungsverfahren nach einem der vorhergehenden Ansprüche, **dadurch gekennzeichnet, dass** in der Übergangsphase (ÜPh) während der Zufuhr der verringerten Luftmasse m_{LÜbergang} zum Brennerraum diesem die gleiche Brennstoffmenge wie im Beharrungs-Betriebszustand (BBZ) zugeführt wird.

8. Steuerungsverfahren nach einem der vorhergehenden Ansprüche, **dadurch gekennzeichnet, dass** dem Brennerraum zumindest während eines Teils der Vorlaufphase (VPh) eine verringerte Luftmasse mit dem Wert m_{LVorlauf} zugeführt wird, der kleiner, gleich oder größer als der Wert m_{LÜbergang} der dem Brennerraum während der Übergangsphase (ÜPh) zugeführten, verringerten Luftmasse ist.

9. Steuerungsverfahren nach einem der Ansprüche 1 bis 7, **dadurch gekennzeichnet, dass** dem Brennerraum zumindest während eines Teils der Vorlaufphase (VPh) eine Luftmasse zugeführt wird, deren Wert m_{LVorlauf} größer ist als der Wert m_{Lnormal} der dem Brennraum während des Beharrungs-Betriebszustandes (BBZ) zugeführten Luftmasse.

10. Steuerungsverfahren nach einem der Ansprüche 1 bis 7, **dadurch gekennzeichnet, dass** dem Brennerraum zumindest während eines Teils der Vorlaufphase (VPh) eine Luftmasse zugeführt wird, deren Wert m_{LVorlauf} gleich dem Wert m_{Lnormal} der dem Brennraum während des Beharrungs-Betriebszustandes (BBZ) zugeführten Luftmasse ist.

11. Steuerungsverfahren nach einem der vorhergehenden Ansprüche, **dadurch gekennzeichnet, dass** der Wechsel von der Zufuhr der verringerten Luftmasse mit dem Wert m_{LÜbergang} zur Zufuhr der dem Brennraum während des Beharrungs-Betriebszustandes (BBZ) zugeführten Luftmasse mit dem Wert m_{Lnormal} sprungartig erfolgt.

12. Steuerungsverfahren nach einem der Ansprüche 1 bis 10, **dadurch gekennzeichnet, dass** der Wechsel von der Zufuhr der verringerten Luftmasse mit dem Wert m_{LÜbergang} zur Zufuhr der dem Brennraum während des Beharrungs-Betriebszustandes (BBZ) zugeführten Luftmasse mit dem Wert m_{Lnormal} stetig ansteigend erfolgt.

13. Steuerungsverfahren nach einem der vorhergehenden Ansprüche, **dadurch gekennzeichnet, dass** der Wert der dem Brennerraum zumindest während eines Teils der Übergangsphase (ÜPh) zugeführten verringerten Luftmasse m_{LÜbergang} konstant ist.

14. Steuerungsverfahren nach einem der Ansprüche 1 bis 12, **dadurch gekennzeichnet, dass** die dem Brennerraum zumindest während eines Teils der Übergangsphase (ÜPh) zugeführte verringerte Luftmasse m_{LÜbergang} innerhalb eines Bereiches von 85 % bis 99 % des Wertes m_{Lnormal} der Dauerbetriebs-Luftmasse variiert wird.

15. Steuerungsverfahren nach einem der vorhergehenden Ansprüche, **dadurch gekennzeichnet, dass** die Änderungen der Luftmasse, die dem Brennerraum zugeführt wird, durch Drehzahländerungen des Gebläses bewirkt werden.

## Claims

1. Control method for the switching on operating sequence of a heating device using fuel, said switching on operating sequence comprising the following time periods:
- a start-up phase (VPh) beginning with the start of the heating device, during which start-up phase (VPh) no fuel but only outside air being conveyed by a fan is supplied to the burner chamber for flushing, said start-up phase being terminated after a predeterminable period of time,
- a starting time (S) of the combustion, at which takes place the activation of the fuel supply and the ignition of the fuel-air mixture subsequently flowing into the burner chamber,
- a steady-state continuous operating phase (BBZ), during which the burner chamber is supplied with an air mass having a value m_{Lnormal} required for achieving the desired lambda value and with a corresponding quantity of fuel,
- a transition phase (ÜPh) preceding the steady-state continuous operating phase (BBZ), which transition phase has a predeterminable time length and during which a reduced air mass is supplied to the burner chamber, said reduced air mass having a value m_{LÜbergang} which is smaller than the value m_{Lnormal} of the air mass being supplied to the burner chamber during the steady-state continuous operating phase (BBZ),
**characterized,**
- **in that** the start-up phase (VPh) is terminated by the starting time (S) of the combustion,
- **in that** the transition phase (ÜPh) directly follows the starting time (S) of the combustion,
- **in that** the value m_{LÜbergang} of the reduced air mass which is supplied to the burner chamber is maintained during a defined period of time which at least partially lies within the transition phase (ÜPh), and
- **in that** the value m_{LÜbergang} of this reduced air mass then rapidly increases to the value m_{Lnormal} of the steady-state continuous operating phase.

2. Control method according to claim 1, **characterized in that** the value m_{LÜbergang} of the reduced air mass which is supplied to the burner chamber at least during part of the transition phase (ÜPh) is in a range of about 85% to about 99% of the value m_{Lnormal} of the air mass which is supplied to the burner chamber during the steady-state continuous operating phase (BBZ).

3. Control method according to claim 2, **characterized in that** the value m_{LÜbergang} of the reduced air mass which is supplied to burner chamber at least during part of the transition phase (ÜPh) is in a range of about 80% to about 95% of the value m_{Lnormal} of the air mass which is supplied to the burner chamber during the steady-state continuous operating phase (BBZ).

4. Control method according to claim 2 or 3, **characterized in that** the supply of the reduced air mass to the burner chamber already begins one to two seconds before the starting time (S) of the combustion.

5. Control method according to one of the preceding claims, **characterized in that** the point in time in which the value of the air mass supplied to the burner chamber is increased from m_{LÜbergang} to m_{Lnormal} lies before the beginning of the steady-state continuous operating phase (BBZ).

6. Control method according to one of the preceding claims, **characterized in that** the period of time during which the reduced air mass m_{LÜbergang} is supplied to the burner chamber does not exceed 20 seconds.

7. Control method according to one of the preceding claims, **characterized in that** in the transition phase (ÜPh) during which the reduced air mass m_{LÜbergang} is supplied to the burner chamber the same amount of fuel is supplied as in the steady-state continuous operating phase (BBZ).

8. Control method according to one of the preceding claims, **characterized in that** at least during a portion of the start-up phase (VPh) a reduced air mass is supplied to the burner chamber the value m_{LVorlauf} of which is smaller, equal to or greater than the value m_{LÜbergang} of the reduced air mass supplied to the burner chamber during the transition phase (ÜPh).

9. Control method according to one of claims 1 to 7, **characterized in that** at least during part of the start-up phase (VPh) to the burner chamber an air mass is supplied whose value m_{LVorlauf} is greater than the value m_{Lnormal} of the air mass which is supplied to the burner chamber during the steady-state continuous operating phase (BBZ).

10. Control method according to one of claims 1 to 7, **characterized in that** at least during part of the start-up phase (VPh) an air mass is supplied to the burner chamber whose value m_{LVorlauf} is equal to the value m_{Lnormal} of the air mass which is. supplied to the burner chamber during the steady-state continuous operating phase (BBZ)

11. Control method according to one of the preceding claims, **characterized in that** the passage from supplying the reduced air mass having the value m_{LÜbergang} to supplying the air mass having the value m_{Lnormal} supplied to the burner chamber during the steady-state continuous operating phase (BBZ) occurs abruptly.

12. Control method according to one of claims 1 to 10, **characterized in that** the passage from supplying the reduced air mass having the value m_{LÜbergang} to supplying the air mass having the value m_{Lnormal} supplied to the burner chamber during the steady-state continuous operating phase (BBZ) increases continuously.

13. Control method according to one of the preceding claims, **characterized in that** the value of the reduced air mass m_{LÜbergang} supplied to the burner chamber is constant at least during a part of the transition phase (ÜPh).

14. Control method according to one of claims 1 to 12, **characterized in that** reduced air mass m_{LÜbergang} which at least during a part of the transition phase (ÜPh) is supplied to the burner chamber is varied within a range of 85% to 99% of the value m_{Lnormal} of the continuous operating phase air mass.

15. Control method according to one of the preceding claims, **characterized in that** the changes in the air mass, which is supplied to the burner chamber, are caused by speed changes of the blower.

## Revendications

1. Procédé de commande pour le processus de mise en marche d'un appareil de chauffage fonctionnant avec du combustible, dans lequel ce processus de mise en marche comporte les intervalles de temps suivants :
- une phase préparatoire (VPh) démarrant avec la mise en marche de l'appareil de chauffage, pendant laquelle seul de l'air extérieur qui est transporté par un ventilateur est amené à la chambre de combustion aux fins de nettoyage, mais aucun air de combustion n'y est amené, et à laquelle on met fin après un laps de temps prédéfini,
- un démarrage (S) de la combustion, qui s'effectue par activation de l'amenée de combustible et par allumage du mélange de combustible et d'air circulant ensuite dans la chambre de combustion,
- un état de fonctionnement en régime stabilisé (BBZ), pendant lequel une masse d'air présentant une valeur m_{Lnormal} nécessaire à l'obtention de la valeur lambda recherchée et une quantité de combustible correspondante sont amenées à la chambre de combustion,
- une phase transitoire (ÜPh) qui fait suite à la phase préparatoire (VPh) et qui précède l'état de fonctionnement en régime stabilisé (BBZ) et qui possède une longueur temporelle pouvant être prédéfinie, et pendant laquelle une masse d'air réduite, dont la valeur m_{LÜbergang} est inférieure à la valeur m_{Lnormal} de la masse d'air amenée à la chambre de combustion pendant l'état de fonctionnement en régime stabilisé (BBZ), est amenée à la chambre de combustion,
**caractérisé**
- **en ce que** le démarrage (S) de la combustion met fin à la phase préparatoire (VPh),
- **en ce que** la phase transitoire (ÜPh) fait directement suite au démarrage (S) de la combustion,
- **en ce que** la valeur m_{LÜbergang} de la masse d'air réduite amenée à la chambre de combustion pendant une période définie située au moins en partie dans la phase transitoire (ÜPh) est conservée, et
- **en ce que** la valeur m_{LÜbergang} de cette masse d'air réduite augmente ensuite rapidement jusqu'à la valeur de fonctionnement permanent m_{Lnormal}.

2. Procédé de commande selon la revendication 1, **caractérisé en ce que** la valeur m_{LÜbergang} de la masse d'air réduite amenée à la chambre de combustion au moins pendant une partie de la phase transitoire (ÜPh) se situe dans une plage d'environ 85 % à environ 99 % de la valeur m_{Lnormal} de la masse d'air amenée à la chambre de combustion pendant l'état de fonctionnement en régime stabilisé (BBZ).

3. Procédé de commande selon la revendication 2, **caractérisé en ce que** la valeur m_{LÜbergang} de la masse d'air réduite amenée à la chambre de combustion au moins pendant une partie de la phase transitoire (ÜPh) se situe dans une plage d'environ 80 % à environ 95 % de la valeur m_{Lnormal} de la masse d'air amenée à la chambre de combustion pendant l'état de fonctionnement en régime stabilisé (BBZ).

4. Procédé de commande selon la revendication 2 ou 3, **caractérisé en ce que** l'amenée de la masse d'air réduite à la chambre de combustion commence déjà une à deux secondes avant le démarrage (S) de la combustion.

5. Procédé de commande selon l'une quelconque des revendications précédentes, **caractérisé en ce que** le moment auquel la valeur de la masse d'air amenée à la chambre de combustion est augmentée de m_{LÜbergang} à m_{Lnormal} se situe avant que l'état de fonctionnement en régime stabilisé (BBZ) soit atteint.

6. Procédé de commande selon l'une quelconque des revendications précédentes, **caractérisé en ce que** le laps de temps pendant lequel l'amenée de la masse d'air réduite m_{LÜbergang} à la chambre de combustion s'effectue ne dépasse pas 20 secondes.

7. Procédé de commande selon l'une quelconque des revendications précédentes, **caractérisé en ce que**, au cours de la phase transitoire (ÜPh), pendant l'amenée de la masse d'air réduite m_{LÜbergang} à la chambre de combustion, la même quantité de combustible que dans l'état de fonctionnement en régime stabilisé (BBZ) est amenée à ladite chambre de combustion.

8. Procédé de commande selon l'une quelconque des revendications précédentes, **caractérisé en ce qu'**une masse d'air réduite présentant la valeur m_{LVorlauf}, qui est inférieure, identique ou supérieure à la valeur m_{LÜbergang} de la masse d'air réduite amenée à la chambre de combustion pendant la phase transitoire (ÜPh), est amenée à la chambre de combustion au moins pendant une partie de la phase préparatoire (VPh).

9. Procédé de commande selon l'une quelconque des revendications 1 à 7, **caractérisé en ce qu'**une masse d'air dont la valeur m_{LVorlauf} est supérieure à la valeur m_{Lnormal} de la masse d'air amenée à la chambre de combustion pendant l'état de fonctionnement en régime stabilisé (BBZ) est amenée à la chambre de combustion au moins pendant une partie de la phase préparatoire (VPh).

10. Procédé de commande selon l'une quelconque des revendications 1 à 7, **caractérisé en ce qu'**une masse d'air dont la valeur m_{LVorlauf} est identique à la valeur m_{Lnormal} de la masse d'air amenée à la chambre de combustion pendant l'état de fonctionnement en régime stabilisé (BBZ), est amenée à la chambre de combustion au moins pendant une partie de la phase préparatoire (VPh).

11. Procédé de commande selon l'une quelconque des revendications précédentes, **caractérisé en ce que** le passage de l'amenée de la masse d'air réduite présentant la valeur m_{LÜbergang} à l'amenée de la masse d'air présentant la valeur m_{Lnormal} amenée à la chambre de combustion pendant l'état de fonctionnement en régime stabilisé (BBZ) s'effectue brusquement.

12. Procédé de commande selon l'une quelconque des revendications 1 à 10, **caractérisé en ce que** le passage de l'amenée de la masse d'air réduite présentant la valeur m_{LÜbergang} à l'amenée de la masse d'air présentant la valeur m_{Lnormal} amenée à la chambre de combustion pendant l'état de fonctionnement en régime stabilisé (BBZ) s'effectue en augmentant progressivement.

13. Procédé de commande selon l'une quelconque des revendications précédentes, **caractérisé en ce que** la valeur de la masse d'air réduite m_{LÜbergang} amenée à la chambre de combustion au moins pendant une partie de la phase transitoire (ÜPh) est constante.

14. Procédé de commande selon l'une quelconque des revendications 1 à 12, **caractérisé en ce que** la masse d'air réduite m_{LÜbergang} amenée à la chambre de combustion au moins pendant une partie de la phase transitoire (ÜPh) varie à l'intérieur d'une plage de 85 % à 99 % de la valeur m_{Lnormal} de la masse d'air en fonctionnement permanent.

15. Procédé de commande selon l'une quelconque des revendications précédentes, **caractérisé en ce que** les modifications de la masse d'air qui est amenée à la chambre de combustion sont réalisées par des modifications de la vitesse du ventilateur.
